# EUROPEAN PATENT SPECIFICATION

(11) **EP 0 862 707 B1**
(45) Date of publication and mention of the grant of the patent: **28.06.2000**
(21) Application number: 96934222.9
(22) Date of filing: 06.11.1996
(51) Int. Cl.: F16K 15/20, B60C 29/00

(54) **VALVE FOR AN INFLATABLE ARTICLE**
VENTIL FÜR EINEN AUFBLASBAREN ARTIKEL
VALVE POUR ARTICLE GONFLABLE

(30) Priority: 07.11.1995 AU PN643895
(43) Date of publication of application: 09.09.1998
(73) Proprietor: Maertin, Philip Helmut, Eleanora Heights, NSW 2101 (AU)
(72) Inventor: Maertin, Philip Helmut, Eleanora Heights, NSW 2101 (AU)
(74) Representative: Nicholls, Michael John
(86) International application number: AU9600699
(87) International publication number: WO9717560

(56) References cited:
- AU-A- 2 421 145
- GB-A- 1 582 975
- US-A- 2 734 308
- US-A- 4 823 831
- US-A- 5 119 842
- US-A- 5 343 889

## Description

The following invention relates to a valve. More particularly, though not exclusively, the invention relates to a valve for an inflatable article such as a beach ball, inflatable mattress, inflatable boat, toy, swimming aid such as a "floatee" or other inflatable plastics objects.

Known valves for such objects comprise a plastics molding having a stem with a passage therethrough closeable by a stopper. Known valves also comprise a flap element formed by cutting the stem off the valve and adapted to block off the passage of air through the stem. The plastics moulding in these valves is flexible to the extent required to allow the housing to be project from the inflatable object for the purpose of inflation and to then be pushed by hand so as to invert and penetrate into the object after inflation, so as to provide a substantially projection-free external surface.

US-A-5 119 842, which forms a basis for the preamble of claim 1, discloses (in fig. 1 and 2) a valve according to the closest prior art.

Known valves often leak without the stopper in place within the passage, resulting in deflation of the article, or the inability to properly inflate the article since some time is required to place the stopper into the passage, during which time air escapes from the article.

### Object of the Invention

It is the object of the present invention to overcome or substantially ameliorate the above disadvantages and/or more generally to provide an improved valve for inflatable articles.

### Disclosure of the Invention

There is disclosed herein a valve for an inflatable article, the valve having:
a flexible housing,
a stem formed integrally with the housing such that in one configuration of the housing the stem projects outwardly of the inflatable article, whereas in another configuration of the housing, the stem resides substantially within the inflatable article, the stem having a passage therethrough,
a wall situated across the passage, said wall having a slit thereacross, the slit being openable upon compression of the stem in a direction transverse to the direction of the passage to allow the passage of fluid through the stem, and
an elastic ring situated about the stem at or nearby the wall and adapted to bear upon the stem to bias the slit into a closed position.

Preferably, the stem is substantially cylindrical, with the wall being substantially circular.

Preferably, the slit is offset from the centre of the wall.

Preferably, the stem comprises a substantially cylindrical outer surface, though having a flat landing portion spaced from the slit and against which the elastic ring bears to bias the slit into the closed position.

Preferably, the valve further comprises a stopper member hingedly affixed to the stem and adapted to close off the passage.

Preferably, the valve further comprises a base by which the valve can be adhered to the inflatable article.

Preferably, the valve and ring are fabricated from flexible, elastic plastics material.

Preferably, the valve further comprises an annular flange about the stem and/or wall presenting an obstacle to the elastic ring thus preventing detachment of the ring from the stem.

### Brief Description of the Drawings

Preferred forms of the present invention will now be described by way of example with reference to the accompanying drawings, wherein:
Fig. 1 is a schematic cross-sectional elevational view of a valve,
Fig. 2 is a schematic inverted plan view of the valve of Fig. 1, and
Fig. 3 is a schematic cross-sectional elevational view of another valve.

### Description of the Preferred Embodiment

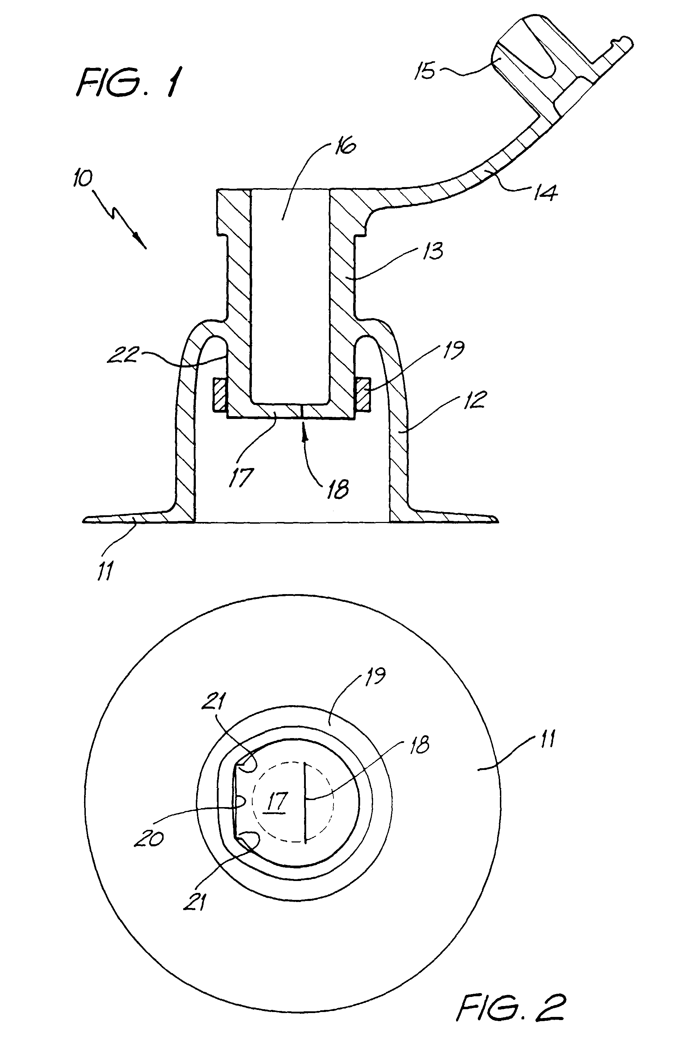

In Figs. 1 and 2 of the accompanying drawings there is depicted a valve 10, typically fabricated from flexible, elastomeric material such as PVC or silicone. The valve may be clear or opaque or anything therebetween.

The valve 10 comprises an annular base 11 by which the valve 10 may be glued, plastics welded or otherwise secured to an inflatable article. Alternatively, the annular base 11 may be laminated between a pair of layers of the skin of an inflatable article.

Extending upwardly and molded integrally with the base 11 is a housing 12 from which a stem 13 extends. Stem 13 has a passage 16 therethrough through which fluid such as air may pass. The upper end of passage 16 may be closed off by a stopper 15 situated near the distal end of a hinge 14 integrally molded as part of the valve.

At the lower end of stem 13 there is provided a transverse wall 17 having a slit 18 cut therein. The slit 18 as shown in Fig. 2 extends across the wall 17, though is offset slightly from the centre of the wall 17.

The outside, substantially cylindrical surface 22 of stem 13 inside the housing 12 comprises a substantially flat landing 20, the flat surface of which is substantially parallel to the slit 18 in wall 17. The flat landing 20 has a pair of edges 21.

Situated about the lower part of the stem 13 is an elastomeric ring 19. The relaxed state diameter of the inside surface of the ring 19 is slightly less than the relaxed state outside diameter of the stem 13 within housing 12. The ring 19 is also fabricated from elastomeric material such as silicone. The internal surface of the ring 19 bears against the external periphery of the stem 22 adjacent to the wall 17. The ring 19 bears upon the edges 21 of the landing 20 to assist in biasing the slit 18 into a closed position.

In use, the housing 12 may be squeezed between say the thumb and index finger such that the internal surface of the housing 12 bears against the ring 19 which in turn distorts the stem 13 and opens the slit 18 to allow inflation of the article by breathing through the passage 16. Alternatively, a football type inflation pump comprising a metallic needle may be passed through the passage 16 and forced through the slit 18 to allow inflation.

Once inflated, the ring 19 biases the slit 18 into the closed position to prevent leakage of fluid from the article. As a secondary sealing measure, the stopper 15 can be inserted into the opening of the passage 16. The stem 13 can now be pushed downwardly into the inflatable article by application of pressure to the exposed surface of the stopper 15. Thus the housing 12 will flex such that the stem 13 resides substantially within the inflatable article.

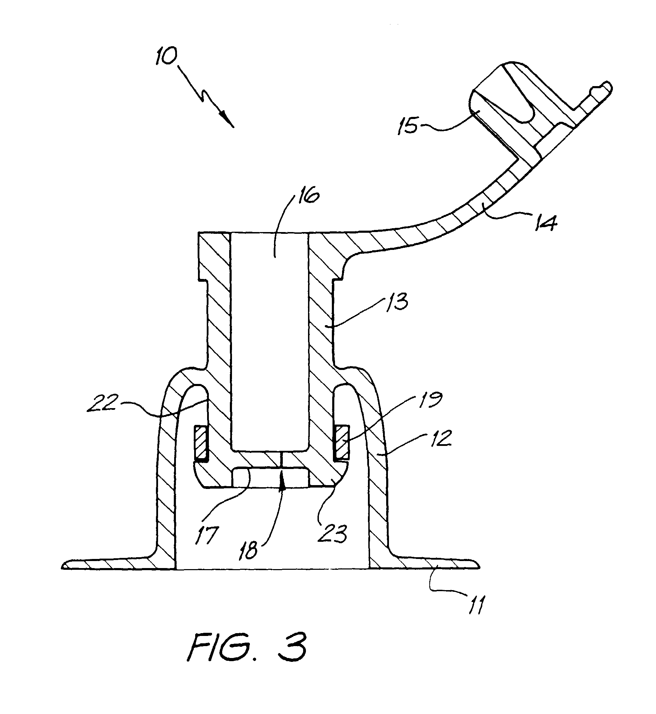

Fig. 3 depicts a further embodiment, substantially the same as that as depicted in Figs. 1 and 2, though with the additional feature of an annular flange 23 molded integrally with the stem 13 and providing an obstacle preventing detachment of the elastic ring 19 from the stem 13. In this embodiment, the wall 17 can be in the position depicted, or alternatively, situated slightly higher, or slightly lower so as to be substantially co-planer with the flange 23. In assembling the valve, the elastic ring 19 is stretched over the flange 23 into the positioned depicted.

It should be appreciated that modifications and alterations obvious to those skilled in the art are not to be considered as beyond the scope of the present invention as it is defined by the appended claims. For example, a pair of crossed slits may be provided in the wall 17.

## Claims

1. A valve (10) for an inflatable article, the valve having:
a flexible housing (12);
a stem (13) formed integrally with the housing such that in one configuration of the housing the stem projects outwardly of the inflatable article, whereas in another configuration of the housing, the stem resides substantially within the inflatable article, the stem having a passage (16) therethrough,
a wall (17) situated across the passage, characterised in that said wall (17) has a slit (18) thereacross, the slit being openable upon compression of the stem in a direction transverse to the direction of the passage to allow the passage of fluid through the stem, and in that
an elastic ring (19) is situated about the stem at or nearby the wall (17) and is adapted to bear upon the stem to bias the slit into a closed position.

2. The valve of claim 1 wherein the stem is substantially cylindrical, with the wall being substantially circular.

3. The valve of claim 1 wherein the slit is offset from the centre of the wall.

4. The valve of claim 3 wherein the stem comprises a substantially cylindrical outer surface, though having a flat landing portion (20) spaced from the slit and against which the elastic ring bears to bias the slit into the closed position.

5. The valve of claim 1 further comprising a stopper member hingedly affixed to the stem and adapted to close off the passage.

6. The valve of claim 1 further comprising a base by which the valve can be adhered to the inflatable article.

7. The valve of claim 1 wherein the valve and ring are fabricated from flexible, elastic plastics material.

8. The valve of claim 1 further comprising an annular flange (23) about the stem and/or wall presenting an obstacle to the elastic ring thus preventing detachment of the ring from the stem.

## Patentansprüche

1. Ventil (10) für einen aufblasbaren Artikel, umfassend:
ein flexibles Gehäuse (12);
einen derart einstückig mit dem Gehäuse ausgebildeten Schaft (13), daß der Schaft in einer Konfiguration des Gehäuses aus dem aufblasbaren Artikel vorsteht, wohingegen in einer anderen Konfiguration des Gehäuses der Schaft im wesentlichen innerhalb des aufblasbaren Artikels verbleibt, wobei der Schaft einen durchgehenden Kanal (16) aufweist;
eine Wand (17), die quer zu dem Kanal angeordnet ist,
**dadurch gekennzeichnet**, daß die Wand (17) einen durchgehenden Schlitz (18) aufweist, der bei Druck auf den Schaft in einer Richtung quer zur Richtung des Kanals sich öffnen kann, um den Durchgang von Fluid durch den Schaft zu ermöglichen, und daß
ein elastischer Ring (19) um den Schaft an der Wand oder in der Nähe der Wand (17) angeordnet und dazu ausgebildet ist, unter Anlage an dem Schaft den Schlitz in eine geschlossene Stellung vorzuspannen.

2. Ventil nach Anspruch 1, bei dem der Schaft im wesentlichen zylindrisch und die Wand im wesentlichen kreisförmig ist.

3. Ventil nach Anspruch 1, bei dem der Schlitz gegenüber der Mitte der Wand versetzt ist.

4. Ventil nach Anspruch 3, bei dem der Schaft eine im wesentlichen zylindrische Außenfläche aufweist, dabei aber einen flachen Stegabschnitt (20) besitzt, der von dem Schlitz beabstandet ist, und gegen den der elastische Ring anliegt, um den Schlitz in die geschlossene Stellung vorzuspannen.

5. Ventil nach Anspruch 1, umfassend ein gelenkig an dem Schaft befestigtes Verschlußglied zum Versperren des Kanals.

6. Ventil nach Anspruch 1, umfassend eine Basis, mittels der das Ventil an dem aufblasbaren Artikel befestigt werden kann.

7. Ventil nach Anspruch 1, bei dem das Ventil und der Ring aus flexiblem, elastischem Kunststoff gefertigt sind.

8. Ventil nach Anspruch 1, umfassend einen Ringflansch (23) um den Schaft und/oder die Wand herum, der ein Hindernis für den elastischen Ring bildet und damit verhindert, daß sich der Ring von dem Schaft löst.

## Revendications

1. Valve (10) pour article gonflable, la valve possédant :
une enveloppe flexible (12),
une tige (13) formée solidairement avec l'enveloppe afin que, dans une configuration de l'enveloppe, la tige dépasse à l'extérieur de l'article gonflable alors que, dans une autre configuration de l'enveloppe, la tige se trouve pratiquement à l'intérieur de l'article gonflable, la tige ayant un passage (16) qui la traverse, et
une paroi (17) disposée dans le passage,
caractérisée en ce que la paroi (17) a une fente (18) en direction transversale, la fente pouvant être ouverte par compression de la tige en direction transversale à la direction de passage pour permettre le passage d'un fluide dans la tige, et en ce que
une bague élastique (19) est placée autour de la tige au niveau de la paroi (17) ou à son voisinage et est destinée à être en appui sur la tige pour rappeler la fente en position de fermeture.

2. Valve selon la revendication 1, dans laquelle la tige est pratiquement cylindrique, la paroi étant pratiquement circulaire.

3. Valve selon la revendication 1, dans laquelle la fente est décalée par rapport au centre de la paroi.

4. Valve selon la revendication 3, dans laquelle la tige a une surface externe pratiquement cylindrique, bien qu'elle aie une partie plate d'appui (20) placée à distance de la fente et contre laquelle est en appui la bague élastique, afin que la fente soit rappelée en position de fermeture.

5. Valve selon la revendication 1, comprenant en outre un organe à bouchon fixé de manière articulée sur la tige et destiné à fermer le passage.

6. Valve selon la revendication 1, comprenant en outre une base grâce à laquelle la valve peut être collée à un article gonflable.

7. Valve selon la revendication 1, dans laquelle la valve et la bague sont formées d'une matière plastique élastique et flexible.

8. Valve selon la revendication 1, comprenant en outre un flasque annulaire (23) placé autour de la tige et/ou de la paroi et présentant un obstacle pour la bague élastique afin que la bague ne puisse pas se séparer de la tige.
